# EUROPÄISCHE PATENTSCHRIFT

(11) **EP 1 637 813 B1**
(45) Veröffentlichungstag und Bekanntmachung des Hinweises auf die Patenterteilung: **31.01.2007**
(21) Anmeldenummer: 04022379.4
(22) Anmeldetag: 21.09.2004
(51) Int. Cl.: F24F 12/00, F25B 29/00

(54) **Wärmerückgewinnungssystem mit Kältemaschine**
Heat recovery system with cooling machine
Système de récupération de chaleur avec machine de refroidissement

(43) Veröffentlichungstag der Anmeldung: 22.03.2006
(73) Patentinhaber: Heinz Schilling KG, 47906 Kempen (DE)
(72) Erfinder: Schilling, Heinz, 47906 Kempen (DE)
(74) Vertreter: COHAUSZ DAWIDOWICZ HANNIG & SOZIEN

(56) Entgegenhaltungen:
- EP-A- 0 143 855
- DE-A1- 19 943 494
- FR-A- 2 299 605
- FR-A- 2 479 435
- SE-B- 333 807
- US-A- 4 061 186
- US-A- 5 573 058

## Beschreibung

Die Erfindung betrifft ein Wärmerückgewinnungssystem, insbesondere im Kreislaufverbund, mit wenigstens einem Wärmetauscher im Abluft-/Fortluftstrom und wenigstens einem Wärmetauscher im Außenluft-/Zuluftstrom einer lüftungstechnischen Anlage, wie z.B. bei einem Gebäude.

Die genannten Wärmerückgewinnungssysteme sind im Stand der Technik allgemein bekannt (siehe z.B. Patent Dokument EP-0143855-A). Hierbei werden üblicherweise zwei über ihre Fluidleitungen miteinander kommunizierende Luft-/Fluidwärmetauscher eingesetzt, um insbesondere in einem Winterbetrieb der warmen Abluft z.B. eines Gebäudes die Wärmeenergie zu entziehen, diese Wärmeenergie auf ein Wärmeträgermedium, wie beispielsweise ein Fluid, z.B. Wasser oder ein Wasserglykolgemisch, zu übertragen und auf diese Weise die Wärmeenergie über das Fluid einem im Zuluftstrom befindlichen Luft-/Fluidwärmetauscher zuzuführen, um so die Wärmeenergie auf die z.B. in ein Gebäude einströmende Zuluft zu übertragen. Hierdurch ergibt sich eine Möglichkeit, Wärmeenergieverluste zu reduzieren, die durch einen erforderlichen Luftaustausch in Gebäuden ansonsten stattfinden würden.

Die Kommunikation der eingesetzten Abluft-Fortluft und Außenluft-/Zuluftwärmetauscher erfolgt auf der Fluidseite über ein sogenanntes Kreislaufverbundsystem, welches nichts anderes bedeutet, als dass ein Fluid als Wärmeträgermedium zwischen den beiden Wärmetauschern zirkulieren kann.

Hierbei sind üblicherweise in dem Kreislaufverbundsystem neben den reinen Fluidleitungen darüber hinaus wenigstens eine Pumpe, Ventile, Druckausgleichsbehälter und andere übliche hydraulische oder elektrohydraulische Bauteile vorhanden. Es ist hierbei ebenso bekannt, eine elektrohydraulische Anschlusseinheit, auch bezeichnet als elektrohydraulische Armaturen-Anschlussrampe, zu verwenden, bei der innerhalb einer baulichen Einheit sämtliche für das Kreislaufverbundsystem notwendige hydraulische und elektrohydraulische Einheiten realisiert sind. Eine derartige elektrohydraulische Anschlusseinheit weist hierbei eine dem Abluftwärmetauscher zugeordnete Anschlussseite und eine dem Zuluftwärmetauscher zugeordnete Anschlussseite auf, wobei über diese Anschlussseiten die Fluidleitungen der jeweiligen Wärmetauscher an die elektrohydraulische Anschlusseinheit angeschlossen werden können.

Es ist weiterhin bekannt, in Gebäuden, insbesondere für einen Sommerbetrieb, Kälteanlagen, insbesondere wie für Klimaanlagen einzusetzen, um im Sommer, wenn hohe Temperaturen vorherrschen, für die Personen ein angenehmes Raumklima zu schaffen, was dadurch erreicht wird, dass durch Energieaufwendung mittels einer üblichen Kältemaschine die von außen zugeführte Luft abgekühlt und sodann in die Räume des Gebäudes eingeleitet wird. Um eine Rückkühlung in der Kondensatorstufe einer derartigen Kältemaschine einer Kälteanlage zu ermöglichen, ist es hierbei üblicherweise vorgesehen, im Gebäude selbst, auf den Dächern, außerhalb des Gebäudes oder im Freigelände die notwendigen Rückkühlanlagen einzusetzen, um die beim Kühlprozess erzeugte Abwärme der Umwelt zuzuführen.

Es zeigt sich im Stand der Technik, dass bislang im Wesentlichen für einen Winterbetrieb zur Rückgewinnung von Wärme ein oben beschriebenes Wärmerückgewinnungssystem und im Sommerbetrieb zur Kühlung der Außenluft ein Kälteanlagensystem eingesetzt wird, wobei beide Systeme unabhängig voneinander arbeiten.

Weiterhin sind im Stand der Technik, z.B. aus der FR 2 299 605 Wärmepumpensysteme mit Kältemaschinen bekannt, um Außenluft Wärme zu entziehen und auf das Gebäudeinnere zu übertragen. Auch diese Systeme sind in Ihrer Funktion festgelegt und weisen keine Funktionsvariabilität auf.

Weiterhin sind hocheffiziente Wärmerückgewinnungssysteme im Kreislaufverbund bekannt, bei welchen das gesamte Wärmerückgewinnungssystem multifunktional zur Kühlung und Entfeuchtung der Außenluft/Zuluft und gleichzeitig zur indirekten adiabaten Verdunstungskühlung und Rückkühlung einer Kältemaschine möglich ist.

Dieses System ist jedoch nur machbar, wenn im Abluft-/Fortluftstrom zusätzlich eine Verdunstungskühlung zum Einsatz gelangt und gleichzeitig die Einzelaustauschgrade der Wärmetauscher 85-90% erzielen. Dies ist bei diesen Systemen zwingend nötig, da ansonsten ein Teil der mechanisch erzeugten Kälte verloren ginge und die eingespeiste Kältemaschinenabwärme zur Minderung der Kältegewinnung aus der durch die Verdunstungskühlung entstandenen Kälte führen würde.

Aufgabe der Erfindung ist es, ein System bereit zu stellen, bei dem mit reduzierten Bauteil-, Montage- und Wartungskosten sowohl im Sommerbetrieb eine Kühlung von Zuluft als auch im Winterbetrieb eine Wärmerückgewinnung durchgeführt werden kann.

Diese Aufgabe wird gemäß einem Aspekt der Erfindung schon in einfacher Weise dadurch gelöst, dass für Kälteanlagensystem, welches wenigstens eine Kältemaschine aufweist, als Rückkühleinheit der Fortluft- bzw. Abluftwärmetauscher eines Wärmerückgewinnungssystems wenigstes teilweise, insbesondere komplett umschaltbar eingesetzt wird.

Da üblicherweise beide Betriebsmodi, d.h. die Wärmerückgewinnung im Winter und die Kühlung im Sommer nicht gleichzeitig zum Einsatz kommen, kann auf diese Art und Weise in einem kombinierten System eine separate Rückkühleinheit, wie sie üblicherweise in bestehenden Kälteanlagensystemen zum Einsatz kommen, entfallen. Ein Abluft- bzw. Fortluftwärmetauscher eines Wärmerückgewinnungssystems kann dementsprechend auf zweierlei Arten verwendet werden.

Gemäß einem anderen Aspekt der Erfindung kann es vorgesehen sein, in einem Wärmerückgewinnungssystem zur Realisierung einer Zuluftkühlung eine zumindest teilweise Umschaltung auf eine Kälteerzeugung vorzusehen, wofür ein Wärmetauscher im Außenluft-/Zuluftstrom zum Kühlen der Zuluft und ein Wärmetauscher im Abluft-/Fortluftstrom zum Rückkühlen der Abwärme einer Kältemaschine einsetzbar ist. Hierfür kann eine Kältemaschine vorgesehen sein, die an die Wärmetauscher zumindest teilweise schaltbar ist, d.h. dass der kondensator- bzw. verdampferseitige Fluidkreislauf einer Kältemaschine an den Fluidkreislauf des Abluft-/Fortluftwärmetauschers bzw. an den Fluidkreislauf des Außenluft-/Zuluftwärmetauschers zumindest teilweise an- und abschaltbar ist.

Hierdurch wird erreicht, dass der Zuluftwärmetauscher zum Kühlen von Zuluft und der Abluftwärmetauscher zum Rückkühlen der Kältemaschine einsetzbar ist.

Erfindungsgemäß ergibt sich hierdurch der besondere Vorteil, dass ein üblicherweise vorgesehenes Wärmerückgewinnungssystem durch Hinzufügung einer Kältemaschine ebenso als Kälteanlagensystem eingesetzt werden kann, um im Sommerbetrieb zugeführte Zuluft zu kühlen. Hierbei wird die beim Kühlen entstehende Abwärmemenge über den Abluftwärmetauscher der Umwelt zugeführt.

Ein derartiges System der erfindungsgemäßen Art ist besonders vorteilhaft, da bezüglich der Kosten ein separates Kühler- und Rückkühlersystem vollständig entfallen kann und hierfür lediglich eine Kältemaschine in das Wärmerückgewinnungssystem zu integrieren ist und weiterhin die Investitionskosten für bauliche Maßnahmen, Kältemaschinen-Aufstellräume, Aufsteltflächen für Rückkühlanlagen etc. und die in Folge erforderlichen Wartungs- und Instandhaltungskosten reduziert werden.

Darüber hinaus kann ein derartiges kombiniertes Wärmerückgewinnungs-/Kühl- und Rückkühlsystem für lüftungsklimatechnische Anlagen herstellersettig aus einer Hand geliefert werden, was insbesondere für den Kunden Vorteile hat.

In einer ersten Alternative kann es vorgesehen sein, dass die fluidführenden Leitungen des Abluftwärmetauschers umschaltbar sind vom Kreislaufverbund, z.B. von einer elektrohydraulischen Anschlusseinheit, auf die Fluidleitungen der Kältemaschine, hier insbesondere eines in der Kältemaschine vorgesehenen Kondensators, wobei die Fluidleitungen dieses Kondensators das Fluid mit der Abwärme führen. Hierfür können beispielsweise kreislaufverbundseitige Ventile geschlossen werden, um anschließend das Fluid durch den Kondensator der Kältemaschine strömen zu lassen.

Die im Wesentlichen selbe Anordnung kann auch verdampferseitig vorgesehen sein, d.h. die fluidführenden Leitungen des Zuluftwärmetauschers können umschaltbar ausgestaltet sein, so dass diese vom Kreislaufverbund bzw. der elektrohydraulischen Anschlusseinheit abgeschaltet werden können und auf die Fluidleitungen der Kältemaschine aufgeschaltet werden können, insbesondere hier auf die Fluidleitungen des vorgesehenen Verdampfers, wobei diese Fluidleitungen das durch die Kältemaschine gekühlte Fluid führen.

Bei einer derartigen erfindungsgemäßen Anordnung können bevorzugt eine Kältemaschine und ein Kreislaufverbund bzw. eine elektrohydraulische Anschlusseinheit fluidtechnisch parallel geschaltet angeordnet sein, wobei insbesondere im verdampfer- und/oder kondensatorseitigen Fluidkreislauf der Kältemaschine eine Umwälzpumpe vorgesehen ist.

Eine derartige Umwälzpumpe ist im Wesentlichen dafür vorgesehen, einen Umlauf des Fluids, zum einen im Kreislauf zwischen Kondensator und Abluftwärmetauscher und zum anderen im Fluidkreislauf zwischen Verdampfer und Zuluftwärmetauscher zu realisieren, was insbesondere dann nötig wird, wenn eine vollständige Entkopplung von den bestehenden Kreislaufverbundkomponenten vorgesehen ist, so dass auch eine üblicherweise in einem Kreislaufverbund bzw. einer elektrohydraulischen Anschlusseinheit vorgesehene Pumpe mit entkoppelt wird. Eine derartige Entkopplung erfolgt z.B., wenn eine Anschlußeinheit abluft- und zuluftseitig Absperrventile aufweist, die zur Umschaltung (mit-)betätigt werden.

Eine besonders bevorzugte zweite Alternative ergibt sich dann, wenn Verdampfer- oder Kondensatorseite der Kältemaschine fluidtechnisch in Reihe mit dem Kreislaufverbund, insbesondere einer elektrohydraulischen Anschlusseinheit geschaltet ist und die entsprechende andere Seite parallel.

Diese bevorzugte Alternative hat den besonderen Vorteil, dass die kondensatorseitigen oder die verdampferseitigen Fluidleitungen der Kältemaschine durch Umschaltungen derart in den existierenden Kreislaufverbund schaltbar sind, dass im Kreislaufverbund vorhandene Bauteile, insbesondere eine Umwälzpumpe und insbesondere auch ein Druckausgleichsgefäß für zumindest eine Seite der Kältemaschine nutzbar sind. Lediglich für die jeweils andere Seite muss in dem dann vorgesehenen separaten Kreislauf eine weitere Umwälzpumpe eingesetzt werden.

Durch die Anordnung, bei der eine der Seiten der Kältemaschine parallel und die andere in Reihe mit dem Kreislaufverbund geschaltet sind, kann dementsprechend bei entsprechender hydraulischer Schaltung bzw. Umschaltung die existierende Pumpe des Kreislaufverbundes mit verwendet werden, so dass sich das erfindungsgemäße kombinierte System in einfacher Weise durch Hinzufügung einer Kältemaschine und einer weiteren Umwälzpumpe sowie entsprechende Umschaltventile realisieren lässt.

Ebenso kann es vorgesehen sein, dass im Kreislaufverbund zwei Pumpen vorgesehen sind, die in Reihe geschaltet sind, wobei eine Pumpe fortluftseitig und eine abluftseitig angeordnet ist. Im Wärmerückgewinnungsbetrieb können dann beide Pumpen gleichzeitig eingesetzt werden , um die nötige Förderleistung bereitzustellen.

Die Anordnung der Pumpen kann hierbei derart sein, dass nach einer Umschaltung die eine Pumpe im kondensatorseitigen und die andere im verdampferseitigen Fluidkreislauf der Kältemaschine angeordnet ist. In diesem Fall muss für die umschaltungsfunktionalität keine weitere Pumpe vorgesehen werden. Auch können dann bevorzugt Kondesatorseite und Verdampferseite der Kältemaschine dann jeweils in Reihe mit den Wärmetauschern geschaltet sein.

Wie vorgenannt, kann das kombinierte System bei einem Wärmerückgewinnungssystem im Kreislaufverbund realisiert werden, bei dem insbesondere die Komponenten des Kreislaufverbunds, abgesehen von den Wärmetauschereinheiten, als elektrohydraulische Baueinheit ausgeführt sind. Eine Umschaltung vom Winterbetrieb mit einer Wärmerückgewinnung zu einem Sommerbetrieb mit einer Kälteerzeugung kann dementsprechend auch dadurch besonders einfach erfolgen, wenn eine elektrohydraulische Anschlusseinheit wenigstens einseitig, d.h. entweder abluftseitig oder zuluftseitig, bevorzugt auf beiden Seiten, Umschalt-Abschaltventile aufweist.

Sodann kann bezogen auf die oben genannte zweite bevorzugte Alternative bei einer Umschaltung der Betriebsmodi eine elektrohydraulische Anschlusseinheit entweder dem kondensator- oder verdampferseitigen Fluidkreislauf zugeordnet werden. Eine Zuordnung wird bevorzugterweise zu dem Kreislauf erfolgen, in dem keine separate Umwälzpumpe vorgesehen ist.

Erfolgt eine Absperrung wenigstens auf einer Seite einer elektrohydraulischen Baugruppe, so wird hierdurch zunächst wenigstens einseitig der Fluidkreislauf der Wärmetauscher unterbrochen, so dass durch eine Zuschaltung, beispielsweise mittels eines Dreiwegeumschaltventils eine Kältemaschine hinzugeschaltet werden kann, um erneut einen Fluidkreislauf auszubilden.

Eine vollständige einseitige Abschaltung einer elektrohydraulischen Anschlusseinheit ist jedoch nicht zwingend nötig, wenn zumindest ein Umschaltventil vorgesehen ist, um wenigstens einseitig einen Fluidkreislauf durch die Anschlusseinheit zu verhindern, wobei jedoch die Anschlusseinheit hydraulisch an den dann gegebenen Fluidkreislauf zwischen Wärmetauscher und einer Seite der Kältemaschine angekoppelt bleibt, so dass hydraulische Bauelemente der Anschlusseinheit, z.B. ein Druckausgleichsgefäß auch im umgeschalteten Kreislauf nutzbar ist.

Beide vorgenannten Alternativen können besonders bevorzugt dadurch weiter gebildet werden, dass der Außenluft-/Zuluftwärmetauscher gerade im Sommerbetrieb zur Entfeuchtung der Zuluft einsetzbar ist, was in bevorzugter Weise dadurch realisiert werden kann, dass durch die Verdampferseite der mit dem Außen-/Zuluftwärmetauscher im Kreislauf stehenden Kältemaschine die Außenluft zunächst bis unter den Taupunkt gekühlt wird, um zu entfeuchten, wobei weiterhin aufgrund der Tatsache, dass die so gekühlte Luft üblicherweise zu kalt ist, im bzw. nach dem Außen-/Zuluftwärmetauscher noch eine Nacherwärmerstufe vorgesehen sein kann, um die unter dem Taupunkt gekühlte Luft derart nachzuerwärmen, dass diese für Personen im Gebäude als angenehm temperiert empfunden wird.

Zur Umschaltung zwischen den einzelnen Betriebsmodi kann es bevorzugt im Rahmen der Erfindung vorgesehen sein, dass in wenigstens einer der Fluidleitungen eines Fortluft- und eines Zuluftwärmetauschers jeweils ein Dreiwegeventil angeordnet ist, um zu bewirken, dass durch Umschaltung des Dreiwegeventils der Fluidstrom bei der Betriebsweise mit einer Kälteerzeugung durch die Verdampfer- bzw. Kondensatorstufe der Kältemaschine geleitet wird. Bei einer derartigen Umschaltung muss dementsprechend lediglich sicher gestellt werden, dass die beiden Wärmetauscher, d.h. Zuluft- und Ablaufwärmetauscher fluidtechnisch nicht mehr miteinander im Kreislaufverbund stehen.

Eine Fluidströmung kann dementsprechend beispielsweise fortluftseitig derart erfolgen, dass das Fluid, welches die Abwärme des Kondensators der Kältemaschine trägt, lediglich in einem Kreislauf zwischen Abluftwärmetauscher und Kondensator strömt, jedoch keinen Kontakt mehr zum übrigen Kreislaufverbund findet. Auf der anderen Seite des Verdampfers kann der Verdampferfluidkreislauf durch Umschaltung des Dreiwegeventils beispielsweise in Reihe mit dem Außenluftwärmetauscher geschaltet werden, wie es der oben genannten zweiten Alternative entspricht, so dass die gekühlte Flüssigkeit des Verdampfers mittels der Pumpe des Kreislaufverbunds bzw. der elektrohydraulischen Anschlusseinheit durch den fortluftseitig abgeschlossenen Kreislaufverbund und durch den Außenluftwärmetauscher strömt, um so die in der Zuluft enthaltene Wärme zu entziehen.

Bei der Ausführung mit den Dreiwegeventilen wird es als besonders vorteilhaft empfunden, wenn die Dreiwegeventile, die den kondensator- bzw. verdampferseitigen Kreisläufen der Kältemaschine zugeordnet sind, durch eine gemeinsame Steuerung zur Umschaltung der betriebsweise elektronisch ansteuerbar sind, insbesondere gleichzeitig ansteuerbar sind. Auf diese Art und Weise kann einfach zwischen den Betriebsmodi umgeschaltet werden.

Um gerade im Sommerbetrieb eine ausreichende Abführung der Abwärme des Kondensators der Kältemaschine zu erreichen, bedarf es einer ausreichenden Temperaturdifferenz zwischen dem Fluidkreislauf des Rückkühlkreises und der Abluft, die aus dem Gebäude durch den Fortluftwärmetauscher strömt.

Um hier eine möglichst hohe Temperaturdifferenz zu erreichen und somit eine optimale Rückkühlung der Kältemaschine sicher zu stellen, kann es in einer weiterhin bevorzugten Ausführung der Erfindung vorgesehen sein, dass die erforderliche Kältemaschinenleistung auf mehrere Kältemaschinen aufgeteilt ist, die in Reihen hintereinander geschaltet sind. Durch diese Kaskadierung kann das Temperaturniveau des kondensatorseitigen Fluidkreislaufes erheblich erhöht werden und verdampferseitig das Temperaturniveau weiter gesenkt werden, was besonders bevorzugt dann erreicht wird, wenn die kondensator- und verdampferseitigen Fluide in entgegengesetzte Fließrichtungen strömen.

Dies bedeutet, dass bei einer Reihenschaltung aus mehreren, d.h. wenigstens zwei Kältemaschinen, kondensatorseitig die Fluidrichtung genau entgegengesetzt ausgebildet ist, d.h. das kondensatorseitige Fluid strömt von dem kondensatorseitigen Eingang der letzten Kältemaschine zu dem Ausgang der letzten Kältemaschine von dort aus zu dem Eingang der davor geschalteten Kältemaschine und so fort, bis dass das Fluid kondensatorseitig in den Eingang der ersten Kältemaschine und von dort zum Ausgang der ersten Kältemaschine geleitet wird.

Demgegenüber wird das Fluid verdampferseitig in eine erste Kältemaschine einströmen, aus dem Ausgang der ersten Kältemaschine ausströmen und wiederum in den verdampferseitigen Eingang der zweiten Kältemaschine einströmen, aus dem verdampferseitigen Ausgang der zweiten Kältemaschine ausströmen und wiederum in die nächste Kältemaschine verdampferseitig einströmen und so fort.

Die Fluidwege der in Reihe hintereinandergeschalteten Kältemaschinen sind dementsprechend gegensinnig zueinander verschaltet.

Wie zuvor beschrieben, sind die Vorteile eines erfindungsgemäßen Wärmerückgewinnungssystems derart, dass es im Winterbetrieb zur Wärmerückgewinnung aus der Fortluft und im Sommerbetrieb zur Kühlung und/oder Entfeuchtung der Zuluft einsetzbar ist. Hierbei kann bevorzugt eine Kältemaschine, insbesondere eine bereits gebäudeseitig vorgesehene Kältemaschine einer Kälteanlage, zum Einsatz im Wärmerückgewinnungssystem vorgesehen werden.

Ausführungsbeispiele der Erfindung sind in den nachfolgenden Abbildungen dargestellt. Es zeigen:
- Figur 1:: ein erfindungsgemäßes Wärmerückgewinnungssystem mit einer einzelnen Kältemaschine;
- Figur 1a:: einen in zwei Teilbereiche aufgeteilten Abluft-/Fortluftwärmetauscher;
- Figur 2:: ein erfindungsgemäßes Wärmerückgewinnungssystem mit drei in Reihe geschalteten Kältemaschinen und gegensinniger Fluidrichtung innerhalb der Kältemaschinen.

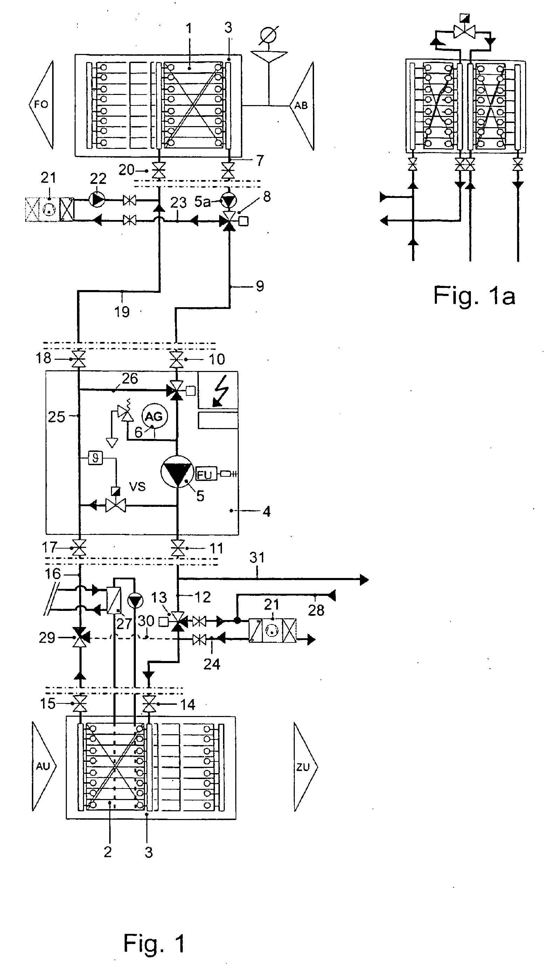

Die Figur 1 zeigt in einer schematischen Übersicht ein erfindungsgemäßes Wärmerückgewinnungssystem, bei dem ein Abluft-/Fortluftwärmetauscher 1 und ein Außenluft-/Zuluftwärmetauscher 2, die jeweils in entsprechenden Lüftungsgehäusen 3 angeordnet sind, im sogenannten Kreislaufverbund miteinander stehen.

Der Kreislaufverbund ist hier derart ausgebildet, dass eine elektrohydraulische Armaturenanschlussrampe bzw. elektrohydraulische Anschlusseinheit 4 vorgesehen ist, die wesentliche für den Betrieb im Kreislaufverbund nötige Komponenten aufweist, wie beispielsweise eine Umwälzpumpe 5 und ein Druckausgleichsgefäß 6.

In einem üblichen Winterbetrieb ist die Funktionsweise derart, dass Abluft aus einem hier nicht dargestellten Gebäude, bezogen auf die Figur 1 von rechts nach links den Fortluftwärmetauscher 1 durchströmt und hierbei ihre Wärme an das im fortluftwärmetauscherfluidseitig strömende Wärmeträgerfluid abgibt. Am insbesondere absperrbaren Auslass 7 des Fortluftwärmetauschers 1 verlässt das Wärmeträgerfluid mit einer der Abluft entnommenen Wärmemenge den Fortluftwärmetauscher 1 und strömt durch ein Dreiwegeumschaltventil 8 durch die Leitung 9 in die bevorzugte absperrbare Anschlussstelle 10 der elektrohydraulischen Anschlusseinheit 4, um sodann mittels der Pumpe 5 zum bevorzugt absperrbaren Anschluss 11 der Einheit 4 zu gelangen und von dort über die Leitung 12 ein ebenso vorgesehenes umschaltbares Dreiwegeventil 13 über den bevorzugt absperrbaren Anschluss 14 in den Außenluftwärmetauscher 2 einzutreten und dort die übertragene Wärmemenge an die im Winter kalte Außenluft abzugeben.

Das Fluid wird sodann im Kreislauf über den bevorzugt absperrbaren Anschluss 15 des Außenluftwärmetauschers 2 und die Leitung 16 zu dem wiederum bevorzugt absperrbaren Anschluss 17 der elektrohydraulischen Anschlusseinheit 4 geleitet, um sodann in der Einheit 4 dem wiederum bevorzugt absperrbaren Anschluss 18 zugeführt zu werden und so über die Leitung 19 zu dem bevorzugt absperrbaren Anschluss 20 des Fortluftwärmetauschers zu gelangen, so dass sich für die umgewälzte Fluidmenge der Kreislauf wiederholt.

Soll nun das derart geschaltete Wärmerückgewinnungssystem von einem Winterbetrieb auf einen Sommerbetrieb umgeschaltet werden, bei dem statt der Wärmerückgewinnung eine Kühlung der Außenluft stattfinden soll, so bedarf es im Wesentlichen lediglich einer Umschaltung der Dreiwegeventile 8 und 13, um einen Fluss des Fluids durch die hier vorgesehene, in diesem Betriebsmodus zuschaltbare Kältemaschine 21 stattfinden zu lassen.

Zur Übersichtlichkeit ist in der Figur 1 ein- und dieselbe Kältemaschine 21 zweifach dargestellt, nämlich zum einen kondensatorseitig im oberen Teil der Abbildung und verdampferseitig im unteren Teil der Abbildung, es handelt sich hierbei jedoch jeweils um dieselbe Kältemaschine 21.

Erkennbar ist hier, dass der Kondensatorteil der Kältemaschine 21 fluidtechnisch mit dem Fortluftwärmetauscher 1 parallel geschaltet und der Verdampferteil der Kältemaschine 21 fluidtechnisch mit dem Außenluftwärmetauscher 2 in Reihe geschaltet ist. Dies entspricht der vorgenannten zweiten bevorzugten Alternative.

Werden nun die Dreiwegeventile 8 und 13 zur Umschaltung betätigt, so ergibt sich bezogen auf den Kondensatorteil der Kältemaschine ein Fluidkreislauf, bei dem das die Abwärme des Kondensators tragende Fluid durch die Pumpe 22 zum Anschluss 20 des Fortluftwärmetauschers 1 geführt wird, um sodann die getragene Wärmemenge an die Fortluft abzugeben. Das Fluid gelangt sodann vom Anschluss 7 des Fortluftwärmetauschers 1 wieder zum Dreiwegeumschaltventil 8, um dann von diesem aufgrund der Umschaltung nicht mehr der Leitung 9, sondern der Leitung 23 zugeführt zu werden, um so wiederum in den Kondensator zurückzugelangen. Es ergibt sich hier dementsprechend aufgrund der Parallelschaltung vom Kondensator und Fortluftwärmetauscher 1 ein kleiner geschlossener Kreislauf, in dem für die Umwälzung mittels der Pumpe 22 Sorge getragen wird. Ein unmittelbarer Fluidaustausch mit Fluid im übrigen Kreislaufverbund, d.h. hier insbesondere mit Fluid in der elektrohydraulischen Baueinheit 4, kann nicht mehr stattfinden.

Verdampferseitig ist der Fluidkreislauf dergestalt, dass das abgekühlte Fluid von dem Verdampfer über die Leitung 24 zum Anschluss 14 des Außenluftwärmetauschers 2 gelangt, so dass in diesem Außenluftwärmetauscher die dem Wärmetauscher 2 zugeführte Außenluft ihre Wärme an das gekühlte Fluid abgibt, welches sodann über den Anschluss 15 des Wärmetauschers die Leitung 16 und den Anschluss 17 der elektrohydraulischen Baueinheit 4 weiter geführt wird, wobei innerhalb der Baueinheit 4 das Fluid über die Leitung 25, 26, die Pumpe 5, den Anschluss 11 der Baueinheit 4, die Leitung 12 und über das umschaltbare Dreiwegeventil 13 wiederum zum Verdampfer geführt wird.

Es ist hier dementsprechend erkennbar, dass aufgrund der Reihenschaltung von Verdampfer, der Kältemaschine 21 und des Außenluftwärmetauschers 2 ein Fluidkreislauf auch noch durch die elektrohydraulische Baueinheit 4 stattfindet, so dass bezogen auf die Verdampferseite der Kältemaschine die hydraulischen Bauelemente der elektrohydraulischen Anschlusseinheit 4 mit verwendet werden können, d.h. es kann hier insbesondere die Pumpe 5 zur Umwälzung und insbesondere auch das Ausgleichsgefäß 6 zum Einsatz kommen.

Das Ausgleichsgefäß 6 kann auch bezüglich des Kondensatorkreislaufs mitgenutzt werden, wenn die 10 und 18 der Anschlusseinheit 4 immer geöffnet bleiben.

Bezogen auf die im allgemeinen Teil beschriebene erste Alternative kann eine Realisierung hier ebenso stattfinden, wenn die verdampferseitige Führung des Fluids genauso realisiert wird wie zur Kondensatorseite beschrieben, d.h. mit einer separaten Pumpe.

Separat dargestellt ist hier noch eine Nacherwärmung 27, um im Sommerbetrieb eine Kühlung der Außenluft unter dem Taupunkt und somit eine Entfeuchtung zu realisieren, wobei die derart heruntergekühlte Außenluft durch die Nacherwärmung 27, die im Außenluftwärmetauscher 2 vorgesehen ist, wieder auf eine Temperatur angehoben wird, die für Personen im Gebäude als angenehm empfunden wird. Die im Wasser-Glykol-Fluidkreislauf dargestellte Nacherwärmerschaltung 27 hat darüber hinaus den Vorteil, dass im Winter ebenfalls nachgeheizt werden kann, ohne den Wärmerückgewinnungsprozess nachteilig zu beeinflussen und insbesondere dass keine Einfriergefahr für den Nacherwärmer besteht.

Die Figur 1 zeigt noch eine Alternative, bei der statt der Pumpe 22 die Pumpe 5a einsetzbar ist. Nur eine der beiden Pumpen wird im System realisiert sein. Diese Anordnung hat den Vorteil, dass im Wärmerückgewinngungsbetrieb die 'benötigte Pumpenleistung auf die beiden Pumpen 5 und 5a aufgeteilt wird, also beiden Pumpen gemeinsam in Reihe in Kreislaufverbund arbeiten. Im umgeschalteten Kältebetrieb kann hier die Pumpe 5 wie zuvor beschrieben im Verdampferkreislauf arbeiten und die Pumpe 5a im Kondensatorkreislauf. Es werden immer beide Pumpen betrieben, egal in welchen Betriebsmodus sich das Sytsme befindet.

Ebenso zeigt die Figur 1 noch die Möglichkeit einen externen Kühlkreislauf 28 vorzusehen, mit dem externe Kälteverbraucher betrieben werden können. Es besteht als keine zwingende Notwendigkeit das gekühlte Fuid durch den Außenluf-/Zuluftwärmetauscher zu leiten. Es kann auch vorgesehen sein, ledigleich einen Teilstrom dem externen Kreislauf 28 zuzuführen und einen anderen Teilstrom dem Außenluft-/Zuluftwärmetauscher 2. Für eine Umgehung des Außenluft-/Zuluftwärmetauscher muß in diesem Fall eine Bypassleitung 30 (gestrichelt dargestellt) vorgesehen werden, die in ein umschaltbares Dreiwegeventil 29 führt.

Ein einem externen Kühlkreislauf führt demnach der Fluidweg von der Kältemaschine 21 durch die Leitung 24 über den Bypass 30 unter Umgehung des Wärmetauschers, vom Ventil 29 durch die Einheit 4 und durch die Leitung 31 in einen externen Kälteverbraucher, über die Leitung 28 zurück in die Kältemaschine.

Die Figur 1 a zeigt noch eine Schaltungsvariante, bei der der Abluft-/Fortluftwärmetauscher 1 in zwei Teilbereiche aufgeteilt ist. Im Sommer, wenn z.B. die Außenluft wärmer ist als die Innenluft kann so im rechtsseitigen Teil des Wärmetauschers 1 zunächst eine Kälterückgewinnung stattfinden, wohingegen nur der linke Teil des Wärmetauschers 1 als Rückkühlstufe für eine Kältemaschine dient. Unabhängig von der konkreten Beschreibung zur Figur 1 kann diese Ausführung allgemein bei allen möglichen Ausführungen realisiert sein.

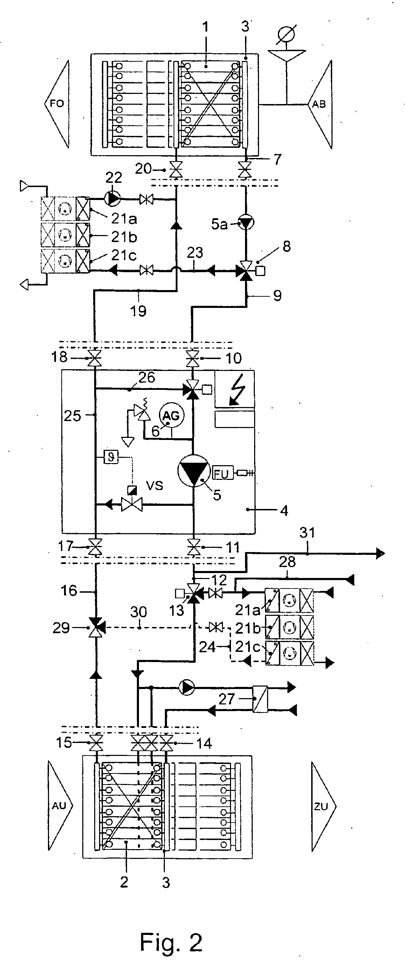

Gegenüber der Figur 1 ist die bevorzugte Weiterbildung in der Figur 2 dergestalt, dass statt einer Kältemaschine 21 hier insgesamt drei Kältemaschinen 21a, b und c zum Einsatz kommen. Diese Ausführung ist bevorzugt, um auf der Kondensatorseite, bezogen auf den als Rückkühlwerk funktionierenden Fortluftwärmetauscher ein besonders hohes Temperaturniveau zu erreichen und derart die Rückkühlung gegenüber der abgeführten Gebäudeluft zu optimieren.

Hierbei ist erkennbar, dass der Fluidkreislauf kondensator- und verdampferseitig genau gegensinnig ausgebildet ist. Dies bedeutet, dass bei Betrachtung der Kondensatorseite das aus dem Fortluftwärmetauscher 1 rückgeführte gekühlte Fluid in dem Kondensator der Wärmemaschine 21c eintritt, von dort zur Kältemaschine 21b und dann zur Kältemaschine 21a gelangt, um sodann über die Pumpe 22 erneut in den Fortluftwärmetauscher 1 überführt zu werden.

Demgegenüber ist die Fluidführung auf der Verdampferseite dergestalt, dass das Fluid in den Verdampfer der Kältemaschine 21 a eintritt, von dort in den Verdampfer der Kältemaschine 21 b und dann in den Verdampfer der Kältemaschine 21 c gelangt.

Die erfindungsgemäße Reihenschaltung von wenigstens zwei Kältemaschinen, hier im Ausführungsbeispiel von drei Kältemaschinen 21a, b und c, die jeweils in Reihe geschaltete Kondensator- und Verdampferstufen aufweisen, können dementsprechend besonders zur Erhöhung des Temperaturniveaus in einer kondensatorseitigen Rückkühlstufe und ggfs. auch zur erhöhten Abkühlung der verdampferseitigen Kühlung eingesetzt werden, wenn die Fließrichtung der in den Kondensator- und Verdampferseite strömenden Fluide entgegengesetzt ist. Eine derartige Reihenschaltung von Kältemaschinen wird daher bevorzugt in dem erfindungsgemäßen Wärmerückgewinnungssystem eingesetzt.

Ebenso ist wie schon in Figur 1 die Möglichkeit dargestellt, statt der Pumnpe 22 eine Pumpe 5a einzusetzten und einen externen Kühlkreisluaf 28 mit gekühltem Fluid zu versorgen.

## Patentansprüche

1. Wärmerückgewinnungssystem, insbesondere im Kreislaufverbund, mit wenigstens einem Wärmetauscher (1) im Abluft-/Fortluftstrom und wenigstens einem Wärmetauscher (2) im Außenluft-/Zuluftstrom einer lüftungstechnischen Anlage, **dadurch gekennzeichnet, dass** es eine zumindest teilweise Umschaltung auf eine Kälteerzeugung umfasst, wofür ein Wärmetauscher (2) im Außenluft-/Zuluftstrom zum Kühlen der Zuluft und ein Wärmetauscher (1) im Abluft-/Fortluftstrom zum Rückkühlen der Abwärme einer Kältemaschine (21) einsetzbar ist.

2. System nach Anspruch 1, **dadurch gekennzeichnet, dass** die fluidführenden Leitungen des Abluft-/Fortluftwärmetauschers (1) wenigstens teilweise umschaltbar sind vom Kreislaufverbund auf die kondensatorseitigen Fluidleitungen der Kältemaschine (21).

3. System nach einem der vorherigen Ansprüche, **dadurch gekennzeichnet, dass** die fluidführenden Leitungen des Außentuft-/Zutuftwärmetauschers (2) wenigstens teilweise umschaltbar sind vom Kreislaufverbund auf die verdampferseitigen Fluidleitungen der Kältemaschine(21).

4. System nach einem der vorherigen Ansprüche, **dadurch gekennzeichnet, dass** eine Kältemaschine (21) und ein Kreislaufverbund fluidtechnisch parallel geschaltet angeordnet sind und insbesondere im verdampfer- und/oder kondensatorseitigen Fluidkreislauf der Kältemaschine (21) eine Umwälzpumpe (22; 5,5a) vorgesehen ist.

5. System nach einem der vorherigen Ansprüche, **dadurch gekennzeichnet, dass** Verdampfer- oder Kondensatorseite der Kältemaschine (21) fluidtechnisch in Reihe mit dem Kreislaufverbund, insbesondere einer elektrohydraulischen Anschlußeinheit (4) geschaltet ist und die entsprechende andere Seite parallel.

6. System nach einem der vorherigen Ansprüche, **dadurch gekennzeichnet, dass** die kondensatorseitigen oder die verdampferseitigen Fluidleitungen der Kältemaschine (21) durch Umschaltung derart in den Kreislaufverbund schaltbar sind, dass im Kreislaufverbund vorhandene Bauteile, insbesondere wenigstens eine Umwälzpumpe (5), für wenigstens eine Seite der Kältemaschine (21) nutzbar sind.

7. System nach einem der vorherigen Ansprüche, **dadurch gekennzeichnet, dass** im Kreislaufverbund zwei Pumpen (5,5a) in Reihe angeordnet sind, von denen eine (5a) fortluftseitig und eine (5) außenluftseitig angeordnet ist, so daß bei einer Umschaltung eine Pumpe (5a) im kondensatorseitigen und eine (5) im verdampferseitigen Fluidkreislauf der Kältmaschine (21) angeordnet ist.

8. System nach einem der vorherigen Ansprüche, **dadurch gekennzeichnet, dass** eine elektrohydraulische Anschlußeinheit (4) mit jeweils absperrbaren fortluft- und zuluftseitigen Fluidleitungen (10,11,17,18) für eine Umschaltung auf Kältemaschinenbetrieb einseitig (10,18) abgesperrt ist

9. System nach einem der vorherigen Ansprüche, **dadurch gekennzeichnet, dass** der Außenluft-/Zuluftwärmetauscher (2) zur Entfeuchtung der Zuluft einsetzbar/eingesetzt ist, insbesondere wobei im/am Außenluft-/ZuluftWärmetauscher (2) eine Nacherwärmerstufe (27) vorgesehen ist, um durch die Kältemaschine (21) unter den Taupunkt gekühlte Zuluft, insbesondere frostsicher, nachzuerwärmen.

10. System nach einem der vorherigen Ansprüche, **dadurch gekennzeichnet, dass** es im Winterbetrieb zur Wärmerückgewinnung aus der Fortluft und Erwärmung der Zuluft und im Sommerbetrieb zur Kühlung/Entfeuchtung der Zuluft und zur Rückkühlung der Kältemaschine (21) einsetzbar/eingesetzt ist.

11. System nach einem der vorherigen Ansprüche, **dadurch gekennzeichnet, dass** eine Kältemaschine (21), insbesondere eine nachträglich gebäudeseitig / lüftungsseitig notwendige Kältemaschine (21) in das Wärmerückgewinnungssystem nachrüstbar/integrierbar ist.

12. System nach einem der vorherigen Ansprüche, **dadurch gekennzeichnet, dass** in wenigstens einer der Fluidleitungen eines Fortluft- und eines Zuluftwärmetauschers jeweils ein Dreiwegeventil (8,13) angeordnet ist, zur Umschaltung des Fuidflusses eines Wärmetauschers (1,2) durch die Kältemaschine (21).

13. System nach Anspruch 12, **dadurch gekennzeichnet, dass** die Dreiwegeventile (8,13) durch eine gemeinsame Steuerung zur Umschaltung der Betriebsweise elektronisch steuerbar sind, insbesondere gleichzeitig steuerbar sind.

14. System nach einem der vorherigen Ansprüche, **dadurch gekennzeichnet, dass** mehrere Kältemaschinen (21 a,b,c) in Reihe hintereinander geschaltet sind.

15. System nach Anspruch 14, **dadurch gekennzeichnet, dass** verdampfer- und kondensatorseitiges Fluid entgegengesetzte Fließrichtungen aufweisen.

16. System nach einem der vorherigen Ansprüche, **dadurch gekennzeichnet, dass** wenigstens teilweise für wenigstens einen externen Kältekreislauf (28) nutzbar ist, insbesondere für Bauteilkühlungen, Kühldecken etc.

17. System nach einem der vorherigen Ansprüche, **dadurch gekennzeichnet, dass** es eine Reihenschaltung von wenigstens zwei Kältemaschinen mit jeweils in Reihe geschalteten Kondensator- und Verdampferstufen aufweist, wobei zur Erhöhung des Temperaturniveaus in einer kondensatorseitigen Rückkühlstufe bzw. zur erhöhten Abkühlung des Kühlwassers die Fließrichtung der in der Kondensator- und Verdampferseite strömenden Fuide entgegengesetzt ist.

18. System nach einem der vorherigen Ansprüche, **dadurch gekennzeichnet, dass** der Abluft-/Fortluftwärmetauscher (1) des Wärmerückgewinnungssystems wenigstens teilweise umschaltbar als Rückkühleinheit einer Kältemaschine eingesetzt ist.

## Claims

1. Heat recovery system, particularly in a circulation unit, with at least one heat exchanger (1) in the exhaust air/outgoing air stream and at least one heat exchanger (2) in the outside air/supply air stream of a ventilation system, **characterised in that** it includes at least partial changeover to refrigeration, for which a heat exchanger (2) in the outside air/supply air stream can be used for cooling the supply air and a heat exchanger (1) in the exhaust air/outgoing air stream can be used for recooling the waste heat of a cooling machine (21).

2. System according to claim 1, **characterised in that** the fluid carrying pipes of the exhaust air/outgoing air heat exchanger (1) can be changed over at least partly from the circulation unit to the condenser side fluid pipes of the cooling machine (21).

3. System according to one of the previous claims, **characterised in that** the fluid carrying pipes of the outside air/supply air heat exchanger (2) can be changed over at least partly from the circulation unit to the evaporator side fluid pipes of the cooling machine (21).

4. System according to one of the previous claims, **characterised in that** a cooling machine (21) and a circulation unit are arranged connected in parallel as regards fluid technology and a circulating pump (22; 5, 5a) is provided particularly in the evaporator and/or condenser side fluid circuit of the cooling machine (21).

5. System according to one of the previous claims, **characterised in that** the evaporator or condenser side of the cooling machine (1) is connected in series with the circulation unit, particularly of an electrohydraulic connecting unit (4) as regards fluid technology and the corresponding other side is in parallel.

6. System according to one of the previous claims, **characterised in that** the condenser side or the evaporator side fluid pipes of the cooling machine (21) can be connected in the circulation unit by changing over in such a way that components in the circulation unit, particularly at least one circulating pump (5), can be used for at least one side of the cooling machine (21).

7. System according to one of the previous claims, **characterised in that** two pumps (5, 5a) are arranged in series in the circulation unit, one (5a) of which is arranged on the outgoing air side and one (5) of which is arranged on the outside air side, so that on changing over one pump (5a) is arranged in the condenser side and one pump (5) is arranged in the evaporator side fluid circuit of the cooling machine (21).

8. System according to one of the previous claims, **characterised in that** an electrohydraulic connecting unit (4) is closed on one side (10, 18) with outgoing air and supply air side fluid pipes (10, 11, 17, 18) which can be closed for changing over to cooling machine operation.

9. System according to one of the previous claims, **characterised in that** the outside air/supply air heat exchanger (2) can be/is used to dehumidify the supply air, particularly in which a reheating stage (27) is provided in/on the outside air/supply air heat exchanger (2), in order to reheat supply air cooled below the dew point through the cooling machine (21), which is resistant to frost in particular.

10. System according to one of the previous claims, **characterised in that** it can be/is used in winter operation for recovering heat from the outgoing air and heating the supply air and in summer operation for cooling/dehumidifying the supply air and recooling the cooling machine (21).

11. System according to one of the previous claims, **characterised in that** a cooling machine (21) particularly a cooling machine (21) subsequently necessary on the building side / ventilation side can be integrated/retrofitted into the heat recovery system.

12. System according to one of the previous claims, **characterised in that** a three way valve (8, 13) is arranged in at least one of the fluid pipes of an outgoing air and a supply air heat exchanger for changing over the flow of fluid of a heat exchanger (1, 2) through the cooling machine (21).

13. System according to claim 12, **characterised in that** the three way valve (8, 13) can be controlled electronically through joint control for changing over the method of operation, it can be controlled simultaneously in particular.

14. System according to one of the previous claims, **characterised in that** several cooling machines (21 a, b, c) are connected in series one behind the other.

15. System according to claim 14, **characterised in that** evaporator side and condenser side fluids flow in opposite directions.

16. System according to one of the previous claims, **characterised in that** it can be used at least partly for at least one external cooling circuit (28), for component cooling, cooling covers, etc, in particular.

17. System according to one of the previous claims, **characterised in that** it has series connection of at least two cooling machines each with condenser and evaporator stages connected in series, in which the fluids flowing in the condenser and evaporator side flow in opposite directions to increase the temperature level in a condenser side cooling stage or to increase cooling of the cooling water.

18. System according to one of the previous claims, **characterised in that** the exhaust air/outgoing air heat exchanger (1) of the heat recovery system can be changed over and is used at least partly as a recooling unit of a cooling machine.

## Revendications

1. Système de récupération de chaleur, en particulier à circuit mixte, comportant au moins un échangeur de chaleur (1) dans le flux d'air sortant/air d'échappement et au moins un échangeur de chaleur (2) dans le flux d'air extérieur/air entrant d'une installation d'aération, **caractérisé en ce qu'**il comporte une inversion, au moins partielle, sur une production de froid, pour laquelle on peut utiliser un échangeur de chaleur (2) dans le flux d'air extérieur/air entrant pour refroidir l'air entrant et un échangeur de chaleur (1) dans le flux d'air sortant/air d'échappement pour refroidir la chaleur dissipée d'une machine frigorifique (21).

2. Système selon la revendication 1, **caractérisé en ce que** les conduites conduisant un fluide de l'échangeur de chaleur à air sortant/air d'échappement (1) peuvent être, au moins en partie, commutables depuis le circuit sur les conduites de fluide, côté évaporateur, de la machine frigorifique (21).

3. Système selon l'une quelconque des revendications précédentes, **caractérisé en ce que** les conduites conduisant un fluide de l'échangeur de chaleur à air extérieur/air entrant (2) peuvent être inversées, au moins en partie, depuis le circuit sur les conduites de fluide côté évaporateur, de la machine frigorifique (21).

4. Système selon l'une quelconque des revendications précédentes, **caractérisé en ce qu'**une machine frigorifique (21) et un circuit mixte sont commutés en parallèle en ce qui concerne le fluide et on prévoit, une pompe de recirculation (22 ; 5, 5a) en particulier dans le circuit fluidique de la machine frigorifique (21) côté évaporateur et/ou condensateur.

5. Système selon l'une quelconque des revendications précédentes, **caractérisé en ce que** le côté évaporateur ou condensateur de la machine frigorifique (21) est commuté, en ce qui concerne le fluide, en série avec le circuit mixte, en particulier une unité périphérique (4) électrohydraulique et l'autre côté correspondant en parallèle.

6. Système selon l'une quelconque des revendications précédentes, **caractérisé en ce que** les conduites de fluide côté condensateur ou côté évaporateur de la machine frigorifique (21) peuvent être commutées, par inversion, dans le circuit mixte, de manière à ce que les composants présents dans le circuit mixte, en particulier au moins une pompe de recirculation (5) puissent être utilisés pour au moins un côté de la machine frigorifique (21).

7. Système selon l'une quelconque des revendications précédentes, **caractérisé en ce que**, dans le circuit mixte, deux pompes (5, 5a) sont disposées en série, dont une (5a) est disposée côté air d'échappement et une (5) côté air extérieur de manière à ce qu'en cas d'inversion, une pompe (5a) soit disposée dans le circuit fluidique côté condensateur et une (5) dans le circuit fluidique côté évaporateur de la machine frigorifique (21).

8. Système selon l'une quelconque des revendications précédentes, **caractérisé en ce qu'**une unité périphérique électrohydraulique (4) comportant des conduites de fluide (10, 11, 17, 18) pouvant être respectivement bloquées côté air d'échappement et air entrant, est bloquée d'un côté (10, 18) pour une inversion dans le mode machine frigorifique.

9. Système selon l'une quelconque des revendications précédentes, **caractérisé en ce que** l'échangeur de chaleur à air extérieur/air entrant (2) peut être utilisé/est utilisé pour déshumidifier l'air entrant, en particulier dans lequel on prévoit, dans/sur l'échangeur de chaleur à air extérieur/air entrant (2) un étage de réchauffeur d'air secondaire (22) pour réchauffer, en particulier de manière résistante au gel, l'air entrant refroidi par la machine frigorifique (21) au-dessous du point de rosée.

10. Système selon l'une quelconque des revendications précédentes, **caractérisé en ce qu'**on peut l'utiliser/on l'utilise en hiver, pour récupérer de la chaleur de l'air d'échappement et réchauffer l'air entrant et, en été, pour refroidir/déshumidifier l'air entrant et refroidir la machine frigorifique (21).

11. Système selon l'une quelconque des revendications précédentes, **caractérisé en ce qu'**une machine frigorifique (21), en particulier une machine frigorifique (21) requise après coup en ce qui concerne le bâtiment/l'aération, peut être installée après coup/intégrée dans le système de récupération de la chaleur.

12. Système selon l'une quelconque des revendications précédentes, **caractérisé en ce que**, dans au moins une des conduites de fluide d'un échangeur de chaleur à air d'échappement et d'un échangeur de chaleur à air entrant, il y a respectivement une vanne trois voies (8, 13) pour inverser l'écoulement fluidique d'un échangeur de chaleur (1, 2) grâce à la machine frigorifique (21).

13. Système selon la revendication 12, **caractérisé en ce que** les vannes trois voies (8, 13), peuvent être commandées électroniquement par une commande commune pour inverser le mode de fonctionnement, en particulier peuvent être commandées en même temps.

14. Système selon l'une quelconque des revendications précédentes, **caractérisé en ce que** plusieurs machines frigorifiques (21a, b, c) sont commutées en série l'une derrière l'autre.

15. Système selon la revendication 14, **caractérisé en ce que** le fluide côté évaporateur et le fluide côté condensateur présentent des sens d'écoulement opposés.

16. Système selon l'une quelconque des revendications précédentes, **caractérisé en ce qu'**on peut l'utiliser au moins en partie pour au moins un circuit frigorifique (28) externe, en particulier pour des refroidissements de composants, des plafonds rafraîchissants, etc.

17. Système selon l'une quelconque des revendications précédentes, **caractérisé en ce qu'**il présente une commutation en série d'au moins deux machines frigorifiques comportant chacune des étages de condensateur et d'évaporateur commutés en série, dans lequel, pour augmenter le niveau de température dans un étage de refroidissement côté condensateur ou pour augmenter le refroidissement de l'eau de refroidissement, les sens d'écoulement des fluides s'écoulant sur le côté condensateur et le côté évaporateur sont amenés à être opposés.

18. Système selon l'une quelconque des revendications précédentes, **caractérisé en ce qu'**on utilise l'échangeur de chaleur à air sortant/air d'échappement (1) du système de récupération de chaleur, au moins en partie inversable, en tant qu'unité de refroidissement en circuit fermé d'une machine frigorifique.
